# EUROPÄISCHE PATENTSCHRIFT

(11) **EP 0 613 568 B1**
(45) Veröffentlichungstag und Bekanntmachung des Hinweises auf die Patenterteilung: **21.08.1996**
(21) Anmeldenummer: 93919004.7
(22) Anmeldetag: 15.09.1993
(51) Int. Cl.: G02B 21/08

(54) **UNIVERSAL-KLAPPKONDENSOR FÜR MIKROSKOPE**
UNIVERSAL FOLDING CONDENSER FOR MICROSCOPES
CONDENSEUR RABATTABLE UNIVERSEL POUR MICROSCOPES

(30) Priorität: 19.09.1992 DE 4231440
(43) Veröffentlichungstag der Anmeldung: 07.09.1994
(73) Patentinhaber: LEICA MIKROSKOPIE UND SYSTEME GmbH, D-35530 Wetzlar (DE)
(72) Erfinder: SCHALZ, Karl-Josef, D-35781 Weilburg (DE); STAHL, Werner, D-35606 Solms (DE)
(74) Vertreter: Stamer, Harald, Dipl.-Phys.
(86) Internationale Anmeldenummer: DE9300868
(87) Internationale Veröffentlichungsnummer: WO9407169

(56) Entgegenhaltungen:
- DE-A- 2 116 625
- DE-A- 3 700 965
- FR-A- 2 355 308

## Beschreibung

Die Erfindung betrifft einen Klappkondensor für ein Mikroskop gemäß dem Oberbegriff des Patentanspruchs 1.

Bei Mikroskopen mit einem Revolver zur Aufnahme von Objektiven mit unterschiedlicher Vergrößerung, werden diese Objektive nacheinander im Wechsel in Wirkstellung gebracht. Ein schnelles Umschalten zwischen diesen Objektiven bedingt jedoch auch eine entsprechende Anpassung der Beleuchtung in Bezug auf die Apertur und das Leuchtfeld. Diese Anpassung wird gemäß der DE-OS 21 16 625 mit einem Kondensor erreicht, bei dem neben einem feststehenden Grundkondensor zusätzliche in den Beleuchtungsstrahlengang einschaltbare Kondensorlinsen vorgesehen sind. Diese Kondensorlinsen sind über ein Gestänge miteinander verbunden, sodaß verschiedene Schaltstellungen eine schnelle Anpassung der Beleuchtung nach einem Objektivwechsel ermöglichen.

Aus der DE-OS 26 26 864 ist ein weiterer Mikroskop-Universalkondensor mit feststehenden Linsengliedern und mit zusätzlichen, in Lichtrichtung vor und hinter dem feststehenden Teil angeordneten, zwangsgekoppelten Linsengliedern bekannnt. Ein unterhalb der feststehenden Linse vorgesehenes Linsenglied ist in einem Schwenkarm angeordnet, dessen Bewegungsrichtung senkrecht zur optischen Achse ausgebildet ist. Ein weiteres Linsenglied ist auf einem Schlitten oberhalb der feststenden Linse angeordnet und wird senkrecht zur optischen Achse und tangential zur Bewegungsrichtung des zweiten Linsenglieds bewegt. Über ein aufwendiges mechanisches Schaltgestänge wird die Schwenkbewegung des Arms durch Zwangskopplung in eine Linearbewegung des Schlittens übertragen.

Bei den bekannten Einrichtungen zur exakten Zwangskopplung der einzelnen Linsenglieder ist ein hoher mechanischer Aufwand notwendig. Durch die komplizierte mechanische Führung ist auch der freie Arbeitsabstand zwischen der feststehenden Linse und den zu schaltenden Linsengliedern gering. Die Einfügung zusätzlicher optischer Bauelemente zur Beeinflussung des Beleuchtungsstrahlenganges wird dadurch erschwert, daß der auf dem Schlitten bewegte Kondensorkopf sehr dicht unterhalb des Mikroskoptisches angeordnet ist, muß hier eine entsprechende Ausnehmung vorgesehen sein.

Es ist daher Aufgabe der vorliegenden Erfindung, ausgehend vom bekannten Stand der Technik, den komplizierten mechanischen Aufbau einer derartigen Einrichtung zu vereinfachen und dabei einen größeren freien Arbeitsabstand zwischen dem feststehenden und den zu schaltenden Linsengliedern zur wahlweisen Aufnahme von zusätzlichen optischen Bauteilen zu schaffen.

Diese Aufgabe wird erfindungsgemäß durch die im kennzeichnenden Teil des Patentanspruchs 1 angegebenen Merkmale gelöst.

Vorteilhafte Weiterbildungen der Erfindung sind Gegenstand der Unteransprüche.

Die Erfindung wird anhand eines Ausführungsbeispiels mit Hilfe der schematischen Zeichnungen näher erläutert. Es zeigen:
Fig. 1: eine Ansicht des Mikroskopkondensors
Fig. 2: einen Schnitt durch den Mikroskopkondensor

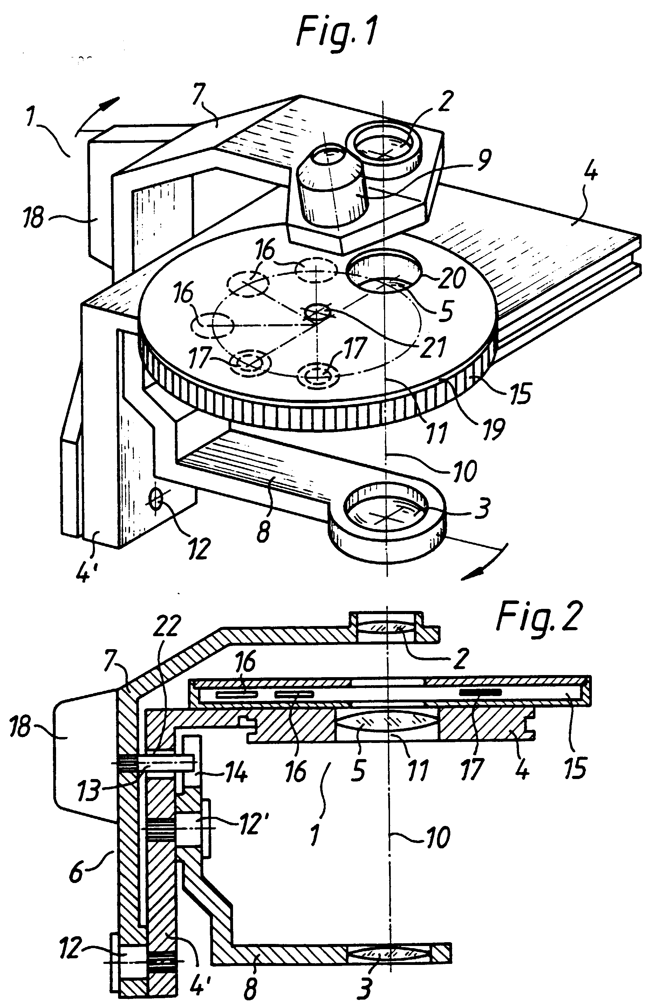

Die Figur 1 zeigt einen Klapp-Kondensor 1 für ein Mikroskop mit einer Trägerplatte 4, die einen um 90° abgewinkelten Arm 4' aufweist. Oberhalb und unterhalb der Trägerplatte 4 sind zwei rechtwinklig geformte Schwenkarme 7 bzw. 8 angeordnet. Die Trägerplatte 4 ist fest am nicht mit dargestellten Mikroskopstativ befestigt bzw. in eine am Stativ angeordnete Schlittenführung eingesetzt und weist eine im Beleuchtungsstrahlengang 11 angeordnete feststehende Linse 5 auf.

Auf der Trägerplatte 4 ist eine Revolverscheibe 15 zur Aufnahme von mehreren Lichtringen 16, Wollaston-Prismen 17 u.ä. über ein Drehlager 21 angeordnet. Die Revolverscheibe 15 ist mit einer Abdeckung 19 zum Schutz gegen äußere Einflüsse versehen, die im Bereich des Beleuchtungsstrahlengangs 11 eine Ausnehmung 20 aufweist.

Ein Schenkel des ersten Schwenkarms 7 trägt einen Kondensorkopf 9 sowie ein Linsenglied 2, während der andere Schenkel des Arms 7 über ein Drehlager 12 mit dem Arm 4' verbunden ist. Die Aufnahmen für den Kondensorkopf 9 und das Linsenglied 2 sind gegeneinander abgewinkelt, sodaß beim Schwenken des Arms 7 das in Wirkstellung befindliche optische Bauteil senkrecht in der Beleuchtungsachse 10 steht.

Ein Schenkel des zweiten Schwenkarms 8 trägt ein zweites Linsenglied 3, wobei der andere Schenkel über ein Drehlager 12' (Fig. 2) mit dem Arm 4' verbunden ist. Die Drehlager 12 und 12' sind jeweils an den gegenüberliegenden Seiten des Arms 4' angeordnet.

Das zweite Linsenglied 3 wird zusammen mit dem ersten Linsenglied 2 synchron in den Beleuchtungsstrahlengang 11 eingebracht. Dazu sind die Schwenkarme 7 und 8 über eine Stift-/Schlitzkopplung 13, 14 (Fig. 2) miteinander zwangsgekoppelt. Um die beiden Schwenkarme 7 und 8 in Pfeilrichtung zu bewegen, ist am Arm 7 eine Handhabe 18 fest angeordnet.

Die Figur 2 zeigt einen Schnitt durch den Mikroskopkondensor 1. In der hier dargestellten Variante sind die beiden Linsenglieder 2 und 3 in Wirkstellung für die Köhler'sche Beleuchtung eines Übersichtsobjektivs. Der Kondensorkopf 9 am ersten Schwenkarm 2 ist, bedingt durch die Darstellung und die winklige Anordnung der Aufnahmen, verdeckt.

Der Schwenkarm 7 ist über das Drehlager 12 mit dem Arm 4' verbunden. Am Schwenkarm 7 ist ein Stift 13 fest angeordnet, der über ein im Arm 4' vorgesehenes Langloch 22 in einen senkrecht zum Stift 13 angeordneten Schlitz 14 im zweiten Schwenkarm 8 eingreift.

Die beiden Schwenkarme 7 und 8 lassen sich durch Ziehen oder bzw. Drücken an der Handhabe 18 bewegen. Die Schwenkbewegung der beiden Linsenglieder 2 und 3 wird durch das Anschlagen des Stifts 13 an den Enden des Langlochs 22 begrenzt. Die Übertragung der Bewegung auf den zweiten Schwenkarm 8 erfolgt durch die Führung des Stifts 13 an den Innenwandungen des Schlitzes 14. Die Bewegungen der beiden Linsenglieder 2 und 3 verlaufen gleichgerichtet auf zwei Kreisbahnen.

### Bezugszeichenliste

- 1 -: Klappkondensor
- 2 -: erstes Linseglied
- 3 -: zweites Linsenglied
- 4 -: Trägerplatte
- 4'-: abgewinkelter Arm von 4
- 5 -: feststehende Linse
- 6 -: Schaltgestänge
- 7 -: erster Schwenkarm
- 8 -: zweiter Schwenkarm
- 9 -: Kondensorkopf
- 10 -: Beleuchtungsachse
- 11 -: Beleuchtungsstrahlengang
- 12, 12' -: Drehlager
- 13 -: Stift
- 14 -: Schlitz
- 15 -: Revolverscheibe
- 16 -: Lichtringe
- 17 -: Wollastonprismen
- 18 -: Handhabe an 7
- 19 -: Abdeckung für 15
- 20 -: Ausnehmung an 19
- 21 -: Drehlager für 15
- 22 -: Langloch

## Patentansprüche

1. Universal-Klappkondensor (1) für mikroskopische Geräte mit einem in einer Trägerplatte (4) angeordneten feststehenden Linsenglied (5) und oberhalb sowie unterhalb dieses Linsengliedes (5) in seine optische Achse (10) wechselweise ein- und ausschaltbaren weiteren Linsengliedern (2,3) zur Apertur- und Leuchtfeldänderung, **dadurch gekennzeichnet**, daß
a) die Trägerplatte (4) einen um 90° abgewinkelten Arm (4') aufweist,
b) an dem Arm (4') zwei übereinanderliegende, senkrecht zur optischen Achse (10) stehende Drehlager (12,12') angeordnet sind,
c) zwei rechtwinklig geformte Schwenkarme (7,8) vorgesehen sind, in deren jeweils einem Schenkel die zu schaltenden Linsenglieder (2,3) befestigt sind, und deren jeweils anderer Schenkel in eines der Drehlager (12,12') eingesetzt ist, wobei
d) die drehgelagerten Schenkel miteinander zur Übertragung einer Schwenkbewegung gekoppelt sind.

2. Universal-Klappkondensor nach Anspruch 1, **dadurch gekennzeichnet**, daß
a) das der Trägerplatte (4) näherliegende Drehlager (12') zur optischen Achse (10) hin gerichtet ist und der in dieses Drehlager (12') eingesetzte Schwenkarm (8) mit seinem das zu schaltende Linsenglied (3) tragenden Schenkel unterhalb der Linse (5) angeordnet ist,
b) das weitere Drehlager (12) von der optischen Achse (10) weg gerichtet ist und der in dieses Drehlager (12) eingesetzte Schwenkarm (7) mit seinem das zu schaltende Linsenglied (2) tragenden Schenkel oberhalb der Linse (5) angeordnet ist,
c) zwischen dem Schwenkarm (7) und dem Schwenkarm (8) eine durch den Arm (4') hindurchreichende Stift-(13)/Schlitz-(14) Kopplung vorgesehen ist.

3. Universal-Klappkondensor nach Anspruch 2, **dadurch gekennzeichnet**, daß an dem oberhalb der Linse (5) angeordneten Schenkel des Dreharmes (7) in Schwenkrichtung nebeneinander liegend ein Linsenglied (2) und ein Kondensorkopf (9) derart eingesetzt sind, daß in einer Schwenkstellung der Arme (7,8) der Kondensorkopf (9) allein und in der anderen Schwenkstellung die Linsenglieder (2,3) gemeinsam in die optische Achse (10) eingeschaltet sind.

4. Universal-Klappkondensor nach einem der vorhergehenden Ansprüche, **dadurch gekennzeichnet**, daß an dem Arm (4') ein die Schwenkstellungen der Schwenkarme (7,8) begrenzendes Langloch (22) vorgesehen ist.

5. Universal-Klappkondensor nach Anspruch 2, **dadurch gekennzeichnet**, daß auf der Trägerplatte (4) eine drehbar gelagerte Revolverscheibe (15) zur Aufnahme von mehreren wahlweise in die optische Achse (10) einbringbaren Lichtringen (16), Prismen (17) u.ä. angeordnet ist und der Schwenkarm (7) die Revolverscheibe (15) übergreift.

## Claims

1. Universal folding condenser (1) for microscope instruments with a stationary lens member (5) arranged in a carrier plate (4) and further lens members (2, 3), which are switchable in and out above and below this lens member (5) into its optical axis (10), for change in aperture and illuminated field, characterised thereby, that
a) the carrier plate (4) displays an arm (4') bent through 90°,
b) two rotary bearings (12, 12'), which lie one above the other and stand perpendicularly to the optical axis (10), are arranged at the arm (4'),
c) two pivot arms (7, 8), which are bent at a right angle, are provided, in the one limb of each of which the lens members (2, 3), which are to be switched, are fastened and the respective other limb of each of which is inserted into a respective one of the rotary bearings (12, 12'), wherein
d) the limbs, which are borne to be rotatable, are coupled together for the transmission of a pivotal movement.

2. Universal folding condenser according to claim 1, characterised thereby, that
a) the rotary bearing (12') nearer to the carrier plate (4) is directed towards the optical axis (10) and the pivot arm (8), which is inserted into this rotary bearing (12'), is arranged by its limb carrying the lens member (3), which is to be switched, to be underneath the lens (5),
b) the further rotary bearing (12) is directed away from the optical axis (10) and the pviot arm (7), which is inserted into this rotary bearing (12), is arranged by its limb carrying the lens member (2), which is to be switched, to be above the lens (5),
c) a pin (13)-and-slot(14) coupling, which reaches through the arm (4'), is provided between the pivot arm (7) and the pivot arm (8).

3. Universal folding condenser according to claim 2, characterised thereby, that a lens member (2) and a condenser head (9), which lie one beside the other in pivotal direction, are inserted in such a manner at that limb of the pivot arm (7), which is arranged above the lens (5), that in one pivotal setting of the arms (7, 8), the condenser head (9) on its own and, in the other pivotal setting, the lens members (2, 3) together are switched into the optical axis (10).

4. Universal folding condenser according to one of the preceding claims, characterised thereby, that an elongate hole (22), which limits the pivotal setting of the pivot arms (7, 8), is provided at the arm (4').

5. Universal folding condenser according to claim 2, characterised thereby, that a turret disc (15), which is borne to be rotatable and for the reception of several light rings (16), prisms (17) and the like, which are selectably introducible into the optical axis (10), is arranged on the carrier plate (4) and the pivot arm (7) engages over the turret disc (15).

## Revendications

1. Condenseur rabattable universel (1) pour appareils de microscopie avec un organe de lentille (5) stationnaire agencé dans une plaque de support (4) et au-dessus ainsi qu'en dessous de cet organe de lentille (5), dans son axe optique, d'autres organes de lentille (2, 3) pouvant être mis en circuit et hors circuit de manière alternée pour la modification de l'ouverture et du champ lumineux caractérisé en ce que
a) la plaque de support (4) présente un bras coudé sur 90° (4'),
b) sur le bras (4') sont agencés deux coussinets de pivotement (12, 12') placés l'un au-dessus de l'autre, perpendiculaires à l'axe optique (10),
c) deux bras pivotants formés en angle (7, 8) sont prévus, dans une branche desquelles à chaque fois sont fixés les organes de lentille (2, 3) à mettre en circuit et dont à chaque fois une autre branche est insérée dans le coussinet de pivotement (12, 12'), ainsi
d) les branches logées rotatives sont couplées l'une à l'autre pour la transmission d'un mouvement de pivotement.

2. Condenseur rabattable universel selon la revendication 1, caractérisé en ce que
a) le coussinet de pivotement (12') le plus proche de la plaque de support (4) est dirigé vers l'axe optique (10) et le bras pivotant (8) inséré dans ce coussinet de pivotement (12') est agencé avec la tige portant l'organe de lentille à changer (3) en dessous de la lentille (5),
b) l'autre coussinet de pivotement (12) est dirigé au loin devant l'axe optique (10) et le bras pivotant (7) placé dans ce coussinet de pivotement (12) est agencé avec la branche portant l'organe de lentille à changer (2) au-dessus de la lentille (5),
c) entre le bras pivotant (7) et le bras pivotant (8) est prévu un accouplement à goupille (13)/fente(14) atteignant le bras (4').

3. Condenseur rabattable universel selon la revendication 2 caractérisé en ce que sur la branche du bras pivotant (7) qui est agencée au-dessus de la lentille (5) sont insérés, en direction de pivotement, côte à côte, un organe de lentille (2) et une tête de condenseur (9) de manière que dans une position de pivotement des bras (7,8) la tête de condenseur (9) soit seule en circuit et dans l'autre position de pivotement, les organes de lentille (2,3) soient ensemble dans l'axe optique (10).

4. Condenseur rabattable universel selon l'une quelconque des revendications précédentes, caractérisé en ce qu'est prévu sur le bras (4') un trou oblong (22) délimitant les positions de pivotement des bras pivotants (7,8).

5. Condenseur rabattable universel selon la revendication 2, caractérisé en ce qu'au-dessus de la plaque de support (4) est agencée une plaque révolver logée rotative (15) pour la réception de plusieurs bagues de lumière (16), prisme (17) et analogues, pouvant être placées au choix dans l'axe optique (10) et le bras pivotant (7) passe au-dessus de la plaque révolver (15).
